(19)

Europäisches
Patentamt
European
Patent Office
Office européen
des brevets

(11)  **EP 2 802 178 A1**

(12)  **EUROPEAN PATENT APPLICATION**
published in accordance with Art. 153(4) EPC

(43) Date of publication:
**12.11.2014  Bulletin 2014/46**

(51) Int Cl.:
***H04W 72/04*** (2009.01)

(21) Application number: **12864465.5**

(22) Date of filing: **05.01.2012**

(86) International application number:
**PCT/CN2012/070054**

(87) International publication number:
**WO 2013/102300 (11.07.2013 Gazette 2013/28)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(71) Applicant: **Fujitsu Limited
Kawasaki-shi, Kanagawa 211-8588 (JP)**

(72) Inventors:
• **ZHANG, Jian
  Beijing 100025 (CN)**
• **ZHANG, Yuantao
  Beijing 100025 (CN)**

• **ZHANG, Yi
  Beijing 100025 (CN)**
• **WANG, Yi
  Beijing 100025 (CN)**
• **ZHOU, Hua
  Beijing 100025 (CN)**

(74) Representative: **Ward, James Norman
  Haseltine Lake LLP
  Lincoln House, 5th Floor
  300 High Holborn
  London WC1V 7JH (GB)**

(54)  **METHOD AND USER DEVICE FOR DISTRIBUTING LINK RESOURCES, METHOD AND BASE STATION FOR MULTIPLEXING TRANSMISSION**

(57)  Embodiments of the present application provide a method for linkage resource assignment, UE, a method for multiplexing transmission and an eNB. The method for linkage resource assignment includes: acquiring, by UE, a lowest PRB index assigned to a PUSCH, cyclic shift information of an uplink DM-RS, and an initial position of a physical resource occupied by uplink grant signaling; and calculating group identification and sequence identification of a PHICH or an ePHICH, according to the lowest PRB index of the PUSCH, the cyclic shift information of the uplink DM-RS, and the initial position of physical resource occupied by uplink grant signaling, so as to determine whether the PHICH or the ePHICH is assigned to the UE. With the embodiments of the present application, a collision of a PHICH or an ePHICH may be reduced.

acquiring, by UE, a lowest PRB index assigned to a PUSCH, cyclic shift information of an uplink DM-RS, and an initial position of a physical resource occupied by uplink grant signaling  — 201

calculating group identification and sequence identification of a PHICH or an ePHICH, according to the lowest PRB index of the PUSCH, the cyclic shift information of the uplink DM-RS, and the initial position of physical resource occupied by uplink grant signaling, so as to determine whether the PHICH or the ePHICH is assigned to the UE  — 202

**Fig. 2**

**Description**

Technical Field

The present application relates to the field of communications, and in particular to a method for linkage resource assignment, UE, a method for multiplexing transmission and an eNB.

Background

A physical hybrid automatic repeat request indicator channel (PHICH) is one of control channels in LTE R8/9/10, which is used for transmitting hybrid ARQ (HARQ) ACK/NACK information for a physical uplink shared channel (PUSCH). An eNB transmits ACK/NACK indication for PUSCH transmission (or retransmission) of UE via a PHICH, and often transmits PHICHs for multiple pieces of UE. Therefore, the UE needs to be able to identify a PHICH transmitted to itself, with the agreement between them being made according to a predefined linkage.

However, for the LTE R11 that is being standardized, the existing PHICH indicating scheme will generate a problem in a newly defined scenario, and a collision possibly occurs.

Furthermore, a physical downlink control channel (PDCCH) is a main channel carrying control information, which is responsible for transferring control information, such as uplink/downlink resource assignment, to UE. In LTE R8/9/10, PDCCH transmission employs an SFBC (spatial frequency block code) transmission diversity policy, and likewise, a PHICH employs SFBC transmission.

However, SFBC mapping manners used by the PDCCH and the PHICH are different when CRS (common reference signal) ports are configured as 4. For ePDCCH (enhanced PDCCH) and ePHICH (enhanced PHICH) that possibly introduced in future LTE-A, if the two are multiplexed in the same RB, how to construct an SFBC pattern needs to be further studied, such as in what manner, or whether it should be respectively reserved, etc.

It should be noted that the above description of the background is merely provided for clear and complete explanation of the present application and for easy understanding by those skilled in the art. And it should not be understood that the above technical solution is known to those skilled in the art as it is described in the background of the present application.

Summary

Embodiments of the present application provide a method for linkage resource assignment, UE, a method for multiplexing transmission and an eNB, with an object being to reduce a collision of a control channel (PHICH /ePHICH), and perform control channel transmission by using an antenna selection diversity to a maximum extent while reducing overhead of a reference signal.

According to one aspect of the embodiments of the present application, there is provided a method for linkage resource assignment, including:

acquiring, by UE, a lowest physical resource block (PRB) index assigned to a PUSCH, and cyclic shift information of an uplink demodulation reference signal (DM-RS), and an initial position of a physical resource occupied by uplink grant signaling; and
calculating group identification and sequence identification of a PHICH or an ePHICH, according to the lowest PRB index of the PUSCH, the cyclic shift information of the uplink DM-RS, and the initial position of physical resource occupied by uplink grant signaling, so as to determine whether the PHICH or the ePHICH is assigned to the UE.

According to another aspect of the embodiments of the present application, there is provided UE, including:

an information acquiring unit, configured to acquire a lowest PRB index assigned to a PUSCH, cyclic shift information of an uplink DM-RS, and an initial position of a physical resource occupied by uplink grant signaling; and
a resource determining unit, configured to calculate group identification and sequence identification of a PHICH or an ePHICH, according to the lowest PRB index of the PUSCH, the cyclic shift information of the uplink DM-RS, and the initial position of the physical resource occupied by uplink grant signaling, so as to determine whether the PHICH or the ePHICH is assigned to the UE.

According to still another aspect of the embodiments of the present application, there is provided a method for multiplexing transmission, including:

transmitting, by an eNB, a control channel at a transmission resource granularity greater than a resource element

by using part of antennas; wherein a transmission resource contains a resource element for transmitting a reference signal.

According to further still another aspect of the embodiments of the present application, there is provided an eNB, including:

a transmitting unit, configured to transmit a control channel at a transmission resource granularity greater than a resource element by using part of antennas; wherein a transmission resource contains a resource element for transmitting a reference signal.

According to further still another aspect of the embodiments of the present application, there is provided a computer-readable program, wherein when the program is executed in UE, the program enables a computer to carry out the method for linkage resource assignment as described above in the UE.

According to further still another aspect of the embodiments of the present application, there is provided a storage medium in which a computer-readable program is stored, wherein the computer-readable program enables a computer to carry out the method for linkage resource assignment as described above in UE.

According to further still another aspect of the embodiments of the present application, there is provided a computer-readable program, wherein when the program is executed in an eNB, the program enables a computer to carry out the method for multiplexing transmission as described above in the eNB.

According to further still another aspect of the embodiments of the present application, there is provided a storage medium in which a computer-readable program is stored, wherein the computer-readable program enables a computer to carry out the method for multiplexing transmission as described above in an eNB.

The advantage of the embodiments of the present application resides in that a control channel (PHICH /ePHICH) is determined according to a lowest PRB index of a PUSCH, cyclic shift information of an uplink DM-RS and an initial position of a physical resource occupied by uplink grant signaling, which may effectively reduce occurrence of a collision.

And control channel transmission may be performed by using part of antennas at a transmission resource granularity greater than a resource element, which may reduce overhead of a reference signal, and perform the control channel transmission by using an antenna selection diversity to a maximum extent.

With reference to the following description and drawings, the particular embodiments of the present application are disclosed in detail, and the principle of the present application and the manners of use are indicated. It should be understood that the scope of the embodiments of the present application is not limited thereto. The embodiments of the present application contain many alternations, modifications and equivalents within the spirits and scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "includes/including/comprises/ comprising" when used in this specification is taken to specify the presence of stated features, integers, steps or components but does not preclude the presence or addition of one or more other features, integers, steps, components or groups thereof.

Brief Description of the Drawings

Many aspects of the application can be better understood with reference to the following drawings. The components in the drawings are not necessarily to scale, emphasis instead being placed upon clearly illustrating the principles of the present application. To facilitate illustrating and describing some parts of the application, corresponding portions of the drawings may be enlarged or reduced in size.

Elements and features depicted in one drawing or embodiment of the application may be combined with elements and features depicted in one or more additional drawings or embodiments. Moreover, in the drawings, like reference numerals designate corresponding parts throughout the several views and may be used to designate like or similar parts in more than one embodiment.

Figure 1 is a schematic diagram of uplink transmission of multiple pieces of SPS UE in a CoMP scenario 4;
Figure 2 is a flowchart of the method for linkage resource assignment of an embodiment of the present application;
Figure 3 is another flowchart of the method for linkage resource assignment of the embodiment of the present application;
Figure 4 is a schematic diagram of the structure of the UE of an embodiment of the present application;
Figure 5 is a schematic diagram of DM-RS-based 4-antenna ePDCCH SFBC transmission when a conventional technology is followed;

Figure 6 is a schematic diagram of DM-RS-based 4-antenna ePHICH SFBC transmission when a conventional technology is followed;

Figure 7 is a flowchart of the method for multiplexing transmission of an embodiment of the present application;

Figure 8 is a schematic diagram of DM-RS-based 4-antenna ePHICH/ ePDCCH SFBC transmission of an embodiment of the present application;

Figure 9 is a schematic diagram of DM-RS configuration of ePHICH/ ePDCCH multiplexing SFBC transmission of an embodiment of the present application;

Figure 10 is another schematic diagram of DM-RS configuration of ePHICH/ePDCCH multiplexing SFBC transmission of an embodiment of the present application;

Figure 11 is still another schematic diagram of DM-RS configuration of ePHICH/ePDCCH multiplexing SFBC transmission of an embodiment of the present application;

Figure 12 is further still another schematic diagram of DM-RS configuration of ePHICH/ePDCCH multiplexing SFBC transmission of an embodiment of the present application; and

Figure 13 is a schematic diagram of the structure of the eNB of an embodiment of the present application.

Detailed Description

The foregoing and other features of the present application will be apparent with reference to the following description and attached drawings. In the description and drawings, particular embodiments of the application have been disclosed in detail as being indicative of some of the ways in which the principles of the application may be employed, but it is understood that the application is not limited to the described embodiments. Rather, the application includes all changes, modifications and equivalents coming within the scope of the appended claims.

Embodiment 1

Following is defined in a link assignment scheme in the current LTE R8/9/10:

A PHICH is identified uniquely by using $\left( n_{\mathrm{PHICH}}^{\mathrm{group}}, n_{\mathrm{PHICH}}^{\mathrm{seq}} \right)$, where,

$$n_{\mathrm{PHICH}}^{\mathrm{group}} = 0, 1, \ldots, N_{\mathrm{PHICH}}^{\mathrm{group}} - 1, \quad n_{\mathrm{PHICH}}^{\mathrm{seq}} = 0, 1, \ldots, 2 N_{\mathrm{SF}}^{\mathrm{PHICH}} - 1 .$$

$N_{\mathrm{PHICH}}^{\mathrm{group}}$ denotes the number of PHICH groups, which is configured by a high layer, and $N_{\mathrm{SF}}^{\mathrm{PHICH}}$ denotes a length of an orthogonal sequence, the values of which being given by Table 1, which shows values of $N_{\mathrm{SF}}^{\mathrm{PHICH}}$ in the PHICH and definitions of orthogonal sequences.

Table 1

| Serial number of sequences | Orthogonal sequences | |
|---|---|---|
| $n_{\mathrm{PHICH}}^{\mathrm{seq}}$ | Lengths of normal CPs $N_{\mathrm{SF}}^{\mathrm{PHICH}} = 2$ | Lengths of extended CPs $N_{\mathrm{SF}}^{\mathrm{PHICH}} = 4$ |
| 0 | [+1 +1 +1 +1] | [+1 +1] |
| 1 | [+1 -1 +1 -1] | [+1 -1] |
| 2 | [+1 +1 -1 -1] | [+j +j] |
| 3 | [+1 -1 -1 +1] | [+j -j] |
| 4 | [+j +j +j +j] | - |
| 5 | [+j -j +j -j] | - |
| 6 | [+j +j -j -j] | - |
| 7 | [+j -j -j +j] | - |

In the Table 1, the orthogonal sequences are used to differentiate different users in a PHICH group. For a specific PHICH group $n_{\mathrm{PHICH}}^{\mathrm{group}}$ , PHICHs of $2N_{\mathrm{SF}}^{\mathrm{PHICH}}$ users may be contained, and different users are differentiated by different orthogonal sequences in Table 1, $n_{\mathrm{PHICH}}^{\mathrm{seq}}$ denoting a serial number of an orthogonal sequence. Therefore, an element group $\left( n_{\mathrm{PHICH}}^{\mathrm{group}}, n_{\mathrm{PHICH}}^{\mathrm{seq}} \right)$ may uniquely identify PHICHs of a user.

In LTE R8/9/10, the $\left( n_{\mathrm{PHICH}}^{\mathrm{group}}, n_{\mathrm{PHICH}}^{\mathrm{seq}} \right)$ is associated with an initial position of a resource assigned for an uplink PUSCH and demodulation reference signal (DM-RS) cyclic shift, thereby impliedly indicating UE position PHICHs of itself. Detailed linkages are defined in standards by the following expressions:

$$n_{PHICH}^{group} = (I_{PRB\_RA} + n_{DMRS}) \bmod N_{PHICH}^{group} + I_{PHICH} N_{PHICH}^{group}$$

$$n_{PHICH}^{seq} = (\lfloor I_{PRB\_RA} / N_{PHICH}^{group} \rfloor + n_{DMRS}) \bmod 2N_{SF}^{PHICH} .$$

The definitions of $N_{\mathrm{PHICH}}^{\mathrm{group}}$ and $N_{\mathrm{SF}}^{\mathrm{PHICH}}$ in the above expressions are the same as those described above, $I_{PRB\_RA}$ denotes an index of a lowest PRB assigned to the PUSCH, $n_{DMRS}$ denotes a DM-RS cyclic shift configured for uplink transmission, and $I_{PHICH}$ is disabled for an FDD system, which is taken as $I_{PHICH} = 0$.

In summary, the identification $\left( n_{\mathrm{PHICH}}^{\mathrm{group}}, n_{\mathrm{PHICH}}^{\mathrm{seq}} \right)$ of the PHICH is dependent on the PUSCH resource position $I_{PRB\_RA}$ assigned for the UE and the DM-RS cyclic shift $n_{DMRS}$, and $I_{PRB\_RA}$ or $n_{DMRS}$ of different pieces of UE is different, thereby achieving differentiation of PHICHs of different pieces of UE.

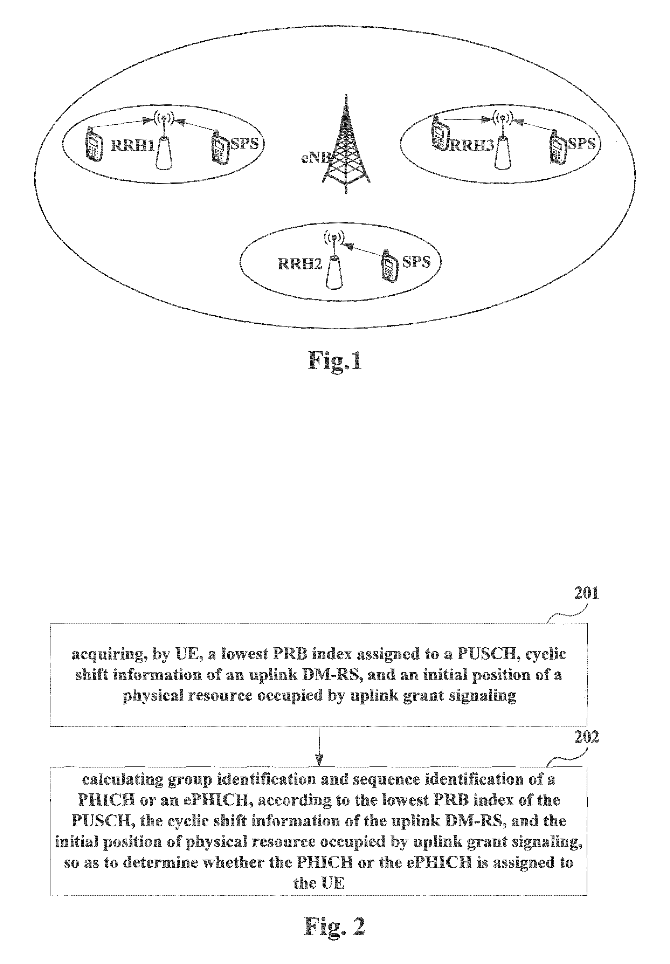

However, for LTE R11 currently under standardization, such a PHICH indication scheme will produce a problem in a newly defined scenario. Fig. 1 is a schematic diagram of uplink transmission of multiple pieces of SPS UE in a CoMP (coordinated multi-point transmission/reception) scenario 4. As shown in Fig. 1, in the CoMP scenario 4, a cell split gain enables the system to accommodate more pieces of uplink UE.

However, when multiple pieces of SPS (semi-persistent scheduling) UE in coverage of different RRHs (remote radio heads) performs PUSCH transmission simultaneously, a collision possibly occurs in the original PHICH link assignment scheme. The main cause resides in that as a DM-RS cyclic shift of the SPS UE is fixed as 0, a PHICH can only be identified by the PUSCH resource position $I_{PRB\_RA}$; and as the number of pieces of uplink accessed UE in scenario 4 is increased, a case will often occur where PUSCH resource initial positions of two or more pieces of UE are identical, that is, the $I_{PRB\_RA}$s are identical. At this moment, a collision will occur, and the original PHICH assignment scheme cannot specify a unique $\mathrm{PHICH}\left( n_{\mathrm{PHICH}}^{\mathrm{group}}, n_{\mathrm{PHICH}}^{\mathrm{seq}} \right)$ for each UE link. Hence, in scenario 4, a new PHICH link indication scheme is needed.

Furthermore, in LTE-A, the application of new scenarios and new technologies has made data channel capacities increased outstandingly. And enhancement of a control channel is embodied in subsequent LTE releases accordingly. The study of ePDCCH has begun in LTE R11, and attention has been paid to the study of ePHICH. It is expected that both ePDCCH and ePHICH are put in a conventional data region PDSCH (physical downlink share channel) for transmission. If a future ePHICH still employs an inter-UE orthogonal code division multiplexing scheme, the problem of a collision analyzed above will still occur (with an assumption of cell-specific ePHICH resource assignment) in scenario 4 if the original PHICH link assignment scheme is followed. Therefore, the problem of ePHICH resource assignment still needs to be solved.

An embodiment of the present application provides a method for linkage resource assignment. Fig. 2 is a flowchart of the method for linkage resource assignment of the embodiment of the present application. As shown in Fig. 2, the method for linkage resource assignment includes:

step 201: acquiring, by UE, a lowest PRB index assigned to a PUSCH, cyclic shift information of an uplink DM-RS, and an initial position of a physical resource occupied by uplink grant signaling; and

step 202: calculating group identification and sequence identification of a PHICH or an ePHICH, according to the lowest PRB index of the PUSCH, the cyclic shift information of the uplink DM-RS, and the initial position of physical resource occupied by uplink grant signaling, so as to determine whether the PHICH or the ePHICH is assigned to the UE.

In an embodiment, the control channel may be a physical downlink control channel (PDCCH), and the UE may determine from the above three parameters whether a PHICH is assigned to itself. New link indication may be expressed by the following formulae:

$$n_{PHICH}^{group} = f\left(I_{PRB\_RA}, n_{DMRS}, I_{UL\_grant}\right)$$

$$n_{PHICH}^{seq} = g\left(I_{PRB\_RA}, n_{DMRS}, I_{UL\_grant}\right).$$

In the above formulae, $f(.)$ and $g(.)$ denote different mapping functions, $I_{PRB\_RA}$ denotes a lowest PRB index of a PUSCH, $n_{DMRS}$ denotes information on an uplink DM-RS cyclic shift, and $I_{UL\_grant}$ denotes an initial position of a physical resource occupied by uplink grant (UL_grant) signaling;

wherein, the UL_grant signaling is transmitted by an eNB to the UE, which is used for enabling the UE to perform PUSCH transmission. The UL_grant is transmitted in a PDCCH region, and the signaling itself needs to occupy a section of physical resources, a lowest physical resource position of which being identified with $I_{UL\_grant}$.

In the above formulae, determination of $n_{PHICH}^{group}$ and $n_{PHICH}^{seq}$ is dependent on three parameters, $I_{PRB\_RA}, n_{DMRS}, I_{UL\_grant}$, with extra $I_{UL\_grant}$, which is a dimension available for differentiation, being added in comparison with an original scheme, thereby further avoiding occurrence of a collision.

In another mode of implementation, the control channel may be an enhanced physical downlink control channel (ePDCCH), and the UE may determine from the above three parameters whether a PHICH/ePDCCH is assigned to itself.

Furthermore, in the case where the control channel is an ePDCCH, the UE may acquire configuration information for identifying different DM-RS ports of physical downlink transmission, and determine whether a PHICH/ePDCCH is assigned to the UE according to the lowest PRB index of the PUSCH, the cyclic shift information of the uplink DM-RS, the initial position of physical resource occupied by uplink grant signaling, and the configuration information for identifying different DM-RS ports of physical downlink transmission.

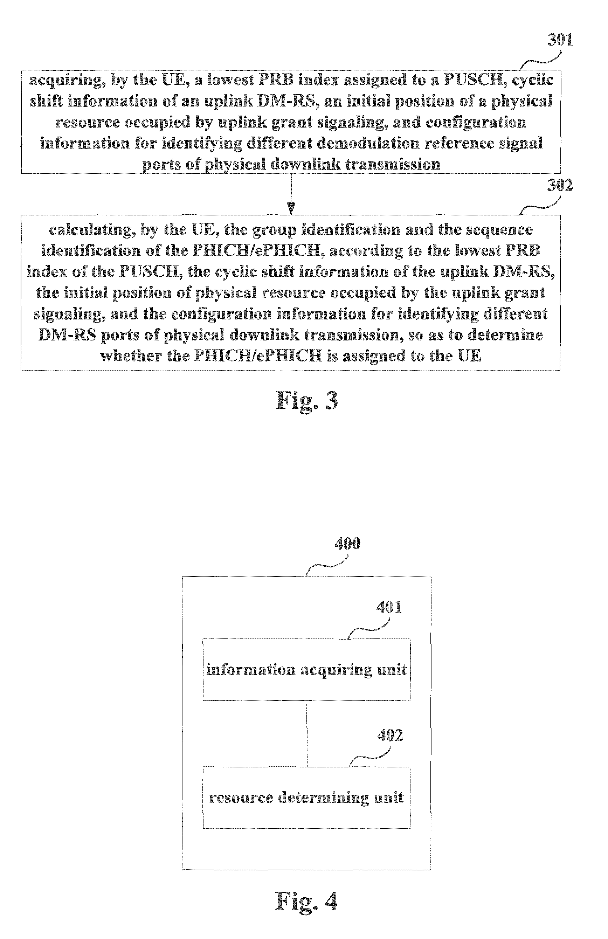

Fig. 3 is another flowchart of the method for linkage resource assignment of the embodiment of the present application. As shown in Fig. 3, the method for linkage resource assignment includes:

step 301: acquiring, by the UE, a lowest PRB index assigned to a PUSCH, cyclic shift information of an uplink DM-RS, an initial position of a physical resource occupied by uplink grant signaling, and configuration information for identifying different DM-RS ports of physical downlink transmission; and

step 302: calculating the group identification and the sequence identification of the PHICH/ePHICH, according to the lowest PRB index of the PUSCH, the cyclic shift information of the uplink DM-RS, the initial position of physical resource occupied by the uplink grant signaling, and the configuration information for identifying different DM-RS ports of physical downlink transmission, so as to determine whether the PHICH/ePHICH is assigned to the UE.

In this embodiment, the new link indication may be expressed by the following formulae:

$$n_{PHICH}^{group} = f\left(I_{PRB\_RA}, n_{DMRS}, I_{UL\_grant}, n_{DL\_DMRS}\right)$$

$$n_{PHICH}^{seq} = g\left(I_{PRB\_RA}, n_{DMRS}, I_{UL\_grant}, n_{DL\_DMRS}\right).$$

In the above formulae, $f(.)$ and $g(.)$ denote different mapping functions, $I_{PRB\_RA}$ denotes a lowest PRB index of a PUSCH, $n_{DMRS}$ denotes information on an uplink DM-RS cyclic shift, $I_{UL\_grant}$ denotes an initial position of a physical resource occupied by uplink grant (UL_grant) signaling, and $n_{DL\_DMRS}$ denotes configuration information for identifying different DM-RS ports of physical downlink transmission;

where, the UL_grant signaling is transmitted by an eNB to the UE, which is used for enabling the UE to perform PUSCH transmission. The UL_grant is transmitted in an ePDCCH region (i.e. a conventional PDSCH region), and the signaling itself needs to occupy a section of physical resources, a lowest physical resource position of which being identified with $I_{UL\_grant}$. This position may be an RE index, or a unit index of a larger granularity defined for an ePDCCH, such as a section of time-frequency resources traversing two slots in a PRB pair assigned in an FDM manner.

An ePDCCH is often demodulated based on a DM-RS, and $n_{DL\_DMRS}$ is used to identify different DM-RS port configuration used in ePDCCH transmission. $I_{PRB\_RA}$ denotes a lowest PRB index assigned for the PUSCH, and $n_{DMRS}$

denotes a DM-RS cyclic shift, the definitions of both of which being the same as those in an existing standard, and both $I_{PRB\_RA}$ and $n_{DMRS}$ being transmitted to the UE via the UL_grant signaling.

In the above formulae, determination of $n_{PHICH}^{group}$ and $n_{PHICH}^{seq}$ is dependent on four parameters, $I_{PRB\_RA}, n_{DMRS}, I_{UL8\_grant}, n_{DL\_DMRS}$, with extra $I_{UL\_grant}, n_{DL\_DMRS}$, which are dimensions available for differentiation, being added in comparison with an original scheme, thereby further avoiding occurrence of a collision.

For example, for the CoMP scenario 4 mentioned above, even if initial PRB indices of PUSCHs of SPS UE in different RRHs are identical, i.e. the $I_{PRB\_RA}$s are identical (and $n_{DMRS}$ = 0 for the SPS UE), occurrence of a collision may still be avoided or alleviated, as the other two parameters, $I_{UL\_grant}$ and $n_{DL\_DMRS}$, may be different for different UE.

The probability of occurrence of a collision may be effectively lowered by employing four parameters jointly to identify an ePHICH resource $\left( n_{PHICH}^{group}, n_{PHICH}^{seq} \right)$. For example, for a case where an ePDCCH uses multi-user MIMO (MU-MIMO) for transmission, although multiple users use identical time-frequency resources to carry UL_grant signaling, i.e. $I_{UL\_grant}$ s are identical, they may be differentiated in different DM-RS assignment schemes, that is, they are differentiated by a parameter, $n_{DL\_DMRS}$. For a case where SPS UE and normal UE in the same subframe coexist and the resources occupied by UL_grant scheduling the two coincide with each other, although $I_{UL\_grant}$ s are identical, the users may still be differentiated by the PUSCH resource position $I_{PRB\_RA}$.

How to calculate $n_{PHICH}^{group}$ and $n_{PHICH}^{seq}$ by using parameters are schematically described above; wherein, the relevant art may be used to determine a PHICH or an ePHICH according to $n_{PHICH}^{group}$ and $n_{PHICH}^{seq}$ and to acquire $I_{PRB\_RA}$, $n_{DMRS}$, $I_{UL\_grant}$ and $n_{DL\_DMRS}$, which shall not be described herein any further.

A particular mode of implementation may be used according to an actual situation for how to calculate $n_{PHICH}^{group}$ and $n_{PHICH}^{seq}$ according to the above parameters. A particular functional mode of implementation shall be given below taking that an ePHICH is determined according to the above four parameters as an example. However, the present application is not limited thereto, and other probabilities of modes of implementation are not excluded.

For example, the ePHICH resource $\left( n_{PHICH}^{group}, n_{PHICH}^{seq} \right)$ may be identified by using the following expressions:

$$n_{PHICH}^{group} = (I_{PRB\_RA} + n_{DMRS} + I_{UL\_grant} + n_{DL\_DMRS}) \bmod N_{PHICH}^{group} + I_{PHICH} N_{PHICH}^{group}$$

$$n_{PHICH}^{seq} = \left( \left\lfloor (I_{PRB\_RA} + I_{UL\_grant}) / N_{PHICH}^{group} \right\rfloor + n_{DMRS} + n_{DL\_DMRS} \right) \bmod 2 N_{SF}^{PHICH} .$$

In the above expressions, the meanings of $N_{PHICH}^{group}$ and $N_{SF}^{PHICH}$ are the same as those described above, and the meanings of $I_{PRB\_RA}$, $n_{DMRS}$ and $I_{PHICH}$ follow those in an existing standard; where, the newly-introduced parameter $I_{UL\_grant}$ denotes a serial number of a lowest position of a resource occupied by the UL_grant signaling, the serial number being in an RE, or being in a minimum assignment granularity defined by the ePDCCH.

And values of $n_{DL\_DMRS}$ are used to identify different DM-RS configuration, which may be determined by a DM-RS port and scrambling identification $n_{SCID}$. Table 2 shows mapping relationship between $n_{DL\_DMRS}$ and DM-RS configuration, and $n_{ND\_DMRS}$ may be determined from Table 2.

Table 2

| DM-RS port | 7 ($n_{SCID}$=0) | 7 ($n_{SCID}$=1) | 8 ($n_{SCID}$=0) | 8 ($n_{SCID}$=1) | 7,8 ($n_{SCID}$=0) | 7,8 ($n_{SCID}$=1) | 7,8,9/ 7,8,9,10 |
|---|---|---|---|---|---|---|---|
| $n_{DL\_DMRS}$ | 0 | 1 | 2 | 3 | 4 | 5 | 6 |

It is provided herein according to an agreement reached in the process of standardization of LTE R11 that an ePDCCH uses DM-RS ports 7-10.

The determination of $n_{DL\_DMRS}$ in Table 2 is mainly in consideration of realization of MU-MIMO of the ePDCCH. For example, if the ePDCCH is transmitted to UE1 and UE2 in an MU-MIMO manner, with UE1 being configured with port7 ($n_{SCID}$=0) and UE2 being configured with port8 ($n_{SCID}$=0), the UL_grant resource positions of the two pieces of UE are identical ($I_{UL\_grant}$s are identical); and if UE1 and UE2 may also not be differentiated by PUSCHs (i.e. $I_{PRB\_RA}$s and $n_{DMRS}$s are identical), differentiation of ePHICH resources may still be realized by $n_{DL\_DMRS}$ ($n_{DL\_DMRS}$ of UE1 is 0, and $n_{DL\_DMRS}$ of UE2 is 2). Furthermore, the eNB may actively schedule and assign the $I_{UL\_grant}$s, so as to avoid a case where the four parameters are completely identical. Thus, the solution of the present application is able to effectively alleviate occurrence of a collision of ePHICHs.

An embodiment of the present application further provides UE. Fig. 4 is a schematic diagram of the structure of the UE 400 of an embodiment of the present application. As shown in Fig. 4, the UE 400 includes: an information acquiring unit 401 and a resource determining unit 402. The relevant art may be referred to for other components of the UE, which are not shown in the figure.

Where, the information acquiring unit 401 acquires a lowest PRB index of a PUSCH, cyclic shift information of an uplink DM-RS, and an initial position of a physical resource occupied by uplink grant signaling;

and the resource determining unit 402 calculates group identification and sequence identification of a PHICH or an ePHICH, according to the lowest PRB index of the PUSCH, the cyclic shift information of the uplink DM-RS, and the initial position of the physical resource occupied by uplink grant signaling, so as to determine whether the PHICH or the ePHICH is assigned to the UE.

In a mode of implementation, the control channel may be a PDCCH, and the UE may determine from the above three parameters whether a PHICH is assigned to itself.

In another mode of implementation, the control channel may be an ePDCCH, and the UE may determine from the above three parameters whether a PHICH/ePDCCH is assigned to itself.

In still another mode of implementation, the control channel may be an ePDCCH, and the information acquiring unit 401 is further configured to acquire configuration information for identifying different DM-RS ports of physical downlink transmission.

And the UE may determine from the above four parameters whether a PHICH/ePDCCH is assigned to itself. The resource determining unit 402 is further configured to calculate the group identification and the sequence identification of the PHICH/ePHICH, according to the lowest PRB index of the PUSCH, the cyclic shift information of the uplink DM-RS, the initial position of the physical resource occupied by the uplink grant signaling, and the configuration information for identifying different DM-RS ports of physical downlink transmission, so as to determine whether the PHICH/ePHICH is assigned to the UE.

Particularly, the resource determining unit 402 may calculate by using the following expressions:

$$n_{PHICH}^{group} = (I_{PRB\_RA} + n_{DMRS} + I_{UL\_grant} + n_{DL\_DMRS}) \bmod N_{PHICH}^{group} + I_{PHICH} N_{PHICH}^{group}$$

$$n_{PHICH}^{seq} = (\lfloor (I_{PRB\_RA} + I_{UL\_grant}) / N_{PHICH}^{group} \rfloor + n_{DMRS} + n_{DL\_DMRS}) \bmod 2N_{SF}^{PHICH} \; ;$$

$n_{\mathrm{PHICH}}^{\mathrm{group}}$ denotes the group identification of the physical hybrid automatic repeat request indicator channel, $n_{\mathrm{PHICH}}^{\mathrm{seq}}$ denotes the sequence identification of the physical hybrid automatic repeat request indicator channel, $N_{\mathrm{PHICH}}^{\mathrm{group}}$ denotes the number of the groups of the physical hybrid automatic repeat request indicator channel, $N_{\mathrm{SF}}^{\mathrm{PHICH}}$ denotes the length of an orthogonal sequence, $I_{PRB\_RA}$ denotes the lowest PRB index of the PUSCH, $n_{DMRS}$ denotes the cyclic shift information of the uplink DM-RS, $I_{UL\_grant}$ denotes the initial position of physical resource occupied by the uplink grant signaling, and $n_{DL\_DMRS}$ denotes the configuration information for identifying different DM-RS ports of physical downlink transmission.

In particular implementation, the initial position of the physical resource occupied by the uplink grant signaling may be in resource element (RE), or in minimum assignment granularity of an ePDCCH.

In particular implementation, the configuration information for identifying different DM-RS ports of physical downlink transmission is determined by a DM-RS port and scrambling identification $n_{SCID}$.

It can be seen from the above embodiment that a PHICH or an ePHICH is determined by three parameters, $I_{PRB\_RA}$, $n_{DMRS}$ and $I_{UL\_grant}$, or four parameters, $I_{PRB\_RA}$, $n_{DMRS}$, $I_{UL\_grant}$ and $n_{DL\_DMRS}$, which may effectively alleviate occurrence of a collision of PHICHs or ePHICHs.

Embodiment 2

A PDCCH is a main channel carrying control information, which is responsible for transferring control information, such as uplink/downlink resource assignment, to UE. For example, the above parameters, $I_{PRB\_RA}$ and $n_{DMRS}$, are both transmitted via a PDCCH (UL_grant). In LTE R8/9/10, PDCCH transmission employs an SFBC transmission diversity policy, and likewise, a PHICH employs SFBC transmission. However, the SFBC mapping schemes used by the two are different when CRS ports are configured as 4.

Assuming that the number of physical (virtual) antennas is 4, as for a case where CRS ports are 4, an SFBC transmission matrix of a PDCCH may be written as:

$$\mathbf{S}_{\text{PDCCH}} = \begin{bmatrix} s_0 & s_1 & 0 & 0 & s_4 & s_5 & 0 & 0 & \dots \\ 0 & 0 & s_2 & s_3 & 0 & 0 & s_6 & s_7 & \dots \\ -s_1^* & s_0^* & 0 & 0 & -s_5^* & s_4^* & 0 & 0 & \dots \\ 0 & 0 & -s_3^* & s_2^* & 0 & 0 & -s_7^* & s_6^* & \dots \end{bmatrix},$$

where, the number of rows of the matrix $S_{PDCCH}$ identifies antennas, and the number of columns identifies resource elements (RE). In comparison, an SFBC matrix of a PHICH is:

$$\mathbf{S}_{\text{PHICH}} = \begin{bmatrix} s_0 & s_1 & s_2 & s_3 & 0 & 0 & 0 & 0 & \dots \\ 0 & 0 & 0 & 0 & s_4 & s_5 & s_6 & s_7 & \dots \\ -s_1^* & s_0^* & -s_3^* & s_2^* & 0 & 0 & 0 & 0 & \dots \\ 0 & 0 & 0 & 0 & -s_5^* & s_4^* & -s_7^* & s_6^* & \dots \end{bmatrix}.$$

For $S_{PDCCH}$ and $S_{PHICH}$, $s_0 \sim s_3$ and $s_4 \sim s_7$ denote respectively a resource element group (REG). It can be seen from the above two formulae that construction manners of SFBC codes of the PDCCH and PHICH in case of 4 CRS ports are different, which is resulted from a requirement that the PHICH needs to ensure orthogonality of the UE within an REG (that is, to ensure that symbols $s_0 \sim s_3$ within an REG to experience identical channel gains).

Currently, an ePDCCH is put in a UE data region (PDSCH) for transmission, and it is usually considered that an ePHICH should also be located in the PDSCH region, and possibly be multiplexed with the ePDCCH in the same PRB pair, for example, the ePHICH is put in a common search space of the ePDCCH. According to an agreement in the process of standardization of an ePDCCH, the ePDCCH may use a DM-RS for demodulation.

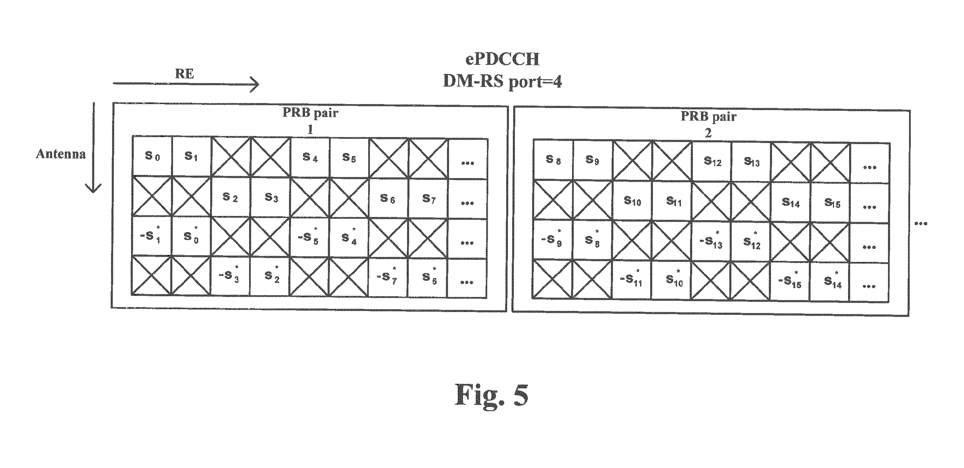

Fig. 5 is a schematic diagram of DM-RS-based ePDCCH SFBC transmission modified based on the relevant art. For SFBC transmission of the ePDCCH, a non-precoded DM-RS needs to be used, and if a conventional transmission policy of PDCCH is followed, a 4-antenna SFBC transmission scheme is shown in Fig. 5. In Fig. 5, in a PRB pair, all of the four antennas transmit data, thus, 4 DM-RS ports need to be used to estimate the channels experienced by the 4 antennas, respectively.

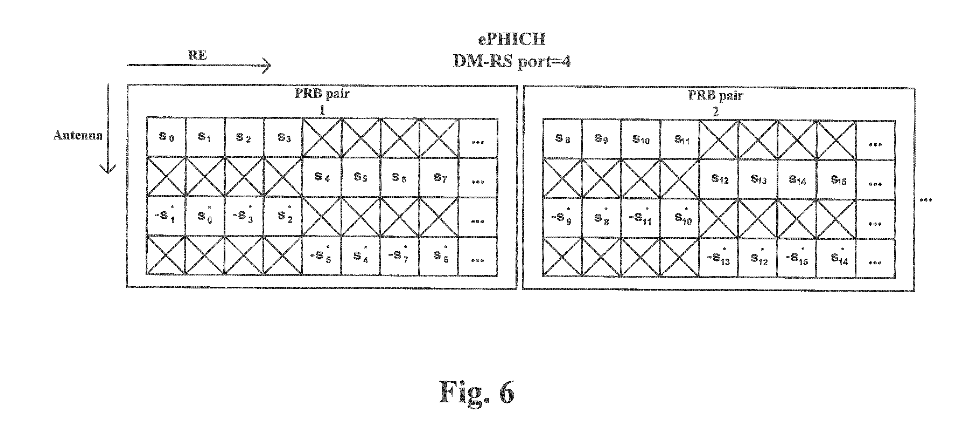

Fig. 6 is a schematic diagram of DM-RS-based ePHICH SFBC transmission modified based on the relevant art. For the ePHICH transmission, if a conventional PHICH transmission scheme is followed, a 4-antenna SFBC transmission is shown in Fig. 6, and a non-precoded DM-RS is also used. In a PRB pair in Fig. 6, all of the four antennas transmit data, thus, 4 DM-RS ports need to be configured to perform channel estimation.

It can be seen from Figs. 5 and 6 that, the current SFBC transmission schemes of an ePDCCH and an ePHICH are different, and in case of 4 antennas, in order to obtain a diversity gain brought by using different antenna transmission, 4 non-precoded DM-RS ports need to be configured, thereby resulting in larger overhead of the reference signal.

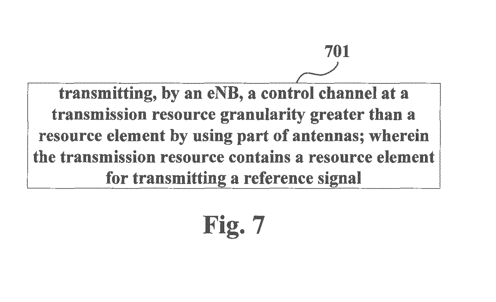

An embodiment of the present application provides a method for multiplexing transmission. Fig. 7 is a flowchart of the method for multiplexing transmission of the embodiment of the present application. As shown in Fig. 7, the method for multiplexing transmission includes:

step 701: transmitting, by an eNB, a control channel at a transmission resource granularity greater than a resource element by using part of antennas; wherein a transmission resource contains a resource element for transmitting a reference signal.

In this embodiment, the control channel may be a PDCCH and a physical hybrid automatic repeat request indicator channel, or the control channel is an ePDCCH and an ePHICH. However, it is not limited thereto, and a particular control channel may be determined according to an actual situation. Furthermore, the method for multiplexing transmission may be based on a DM-RS, or based on a common reference signal. Following description is given taking transmission of an ePDCCH and an ePHICH based on a DM-RS as examples.

In a mode of implementation, the transmission resource is in a PRB pair, that is, the SFBC mapping and transmission are in 2 slots.

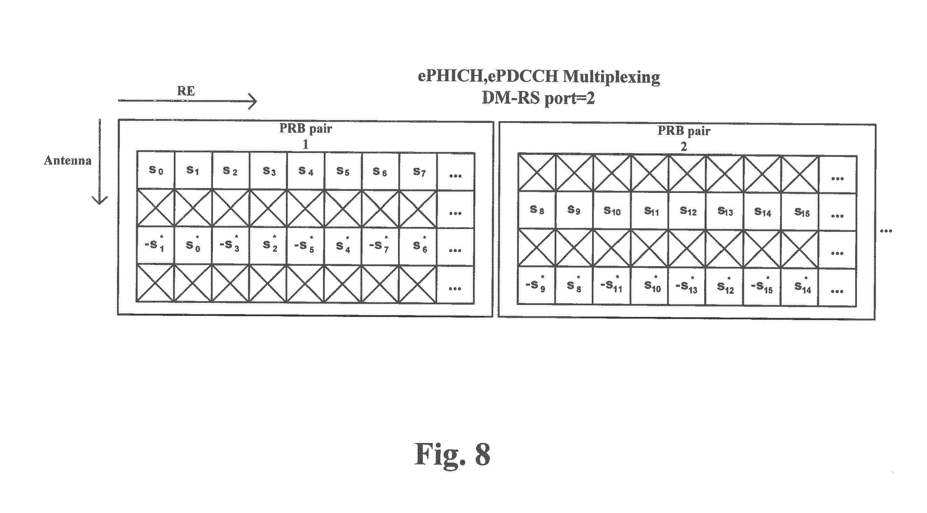

Fig. 8 is a schematic diagram of DM-RS-based ePHICH/ePDCCH SFBC transmission of an embodiment of the present application. It can be seen from Fig. 8 that in a PRB pair, only two antennas transmit data, hence, only two DM-RS ports need to be configured for channel estimation, thereby lowering the overhead of a reference signal.

Where, antennas shall be reselected between two adjacent PRB pairs. For example, the first PRB pair uses antennas 1 and 3 to form SFBC transmission, and the second PRB pair uses antennas 2 and 4 to form SFBC transmission, thereby exploiting antenna selection gains by cycling antennas in a manner of one PRB pair by one PRB pair.

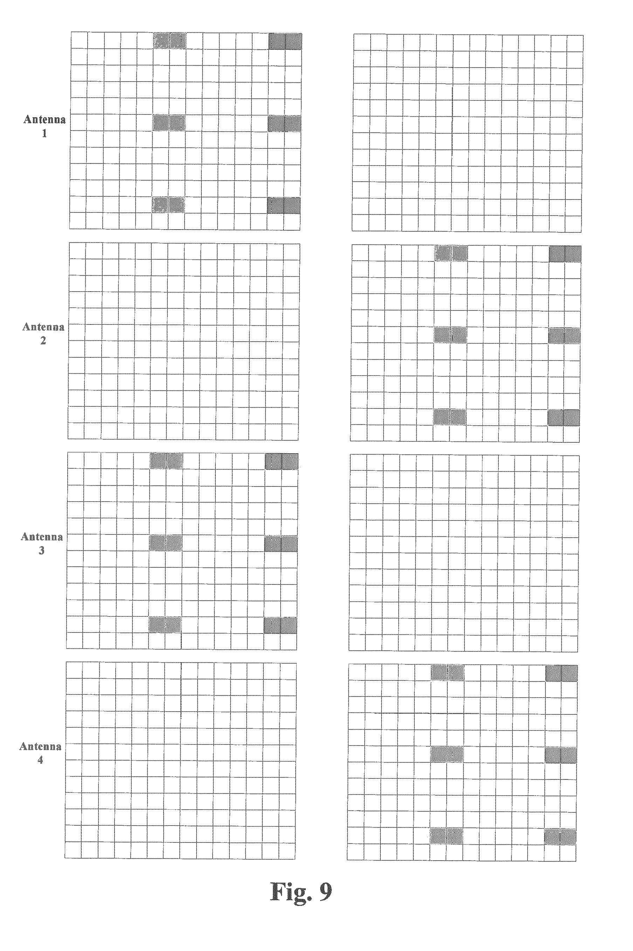

Fig. 9 is a schematic diagram of DM-RS configuration of ePHICH/ePDCCH multiplexing SFBC transmission of an embodiment of the present application. Fig. 9 illustrates a complete PRB pair transmitted by each antenna, intuitively showing DM-RS configuration of each antenna.

As shown in Fig. 9, the SFBC transmission uses only DM-RS ports 7 and 8, and the position occupied by the DM-RS in a PRB pair is shown in Fig. 9. In the first PRB pair, the DM-RS exists only in antennas 1 and 3, that is, antennas 1 and 3 form SFBC transmission, in the second PRB pair, the DM-RS exists only in antennas 2 and 4, that is, antennas 2 and 4 form SFBC transmission, and so on; and antennas are cycled once every PRB pair, thereby obtaining a performance gain possibly brought by the antenna selection.

Hence, the SFBC transmission scheme is applicable both to an ePDCCH and an ePHICH, and only 2 DM-RS ports are needed, thereby reducing overhead of a reference signal, and obtaining a performance gain possibly brought by the antenna selection. And as an ePDCCH and an ePHICH have a unified SFBC transmission scheme, it is applicable to transmission of a resource block multiplexing the ePDCCH and the ePHICH.

In another mode of implementation, the transmission resource is in a PRB, that is, the SFBC mapping and transmission are in individual PRB (one slot).

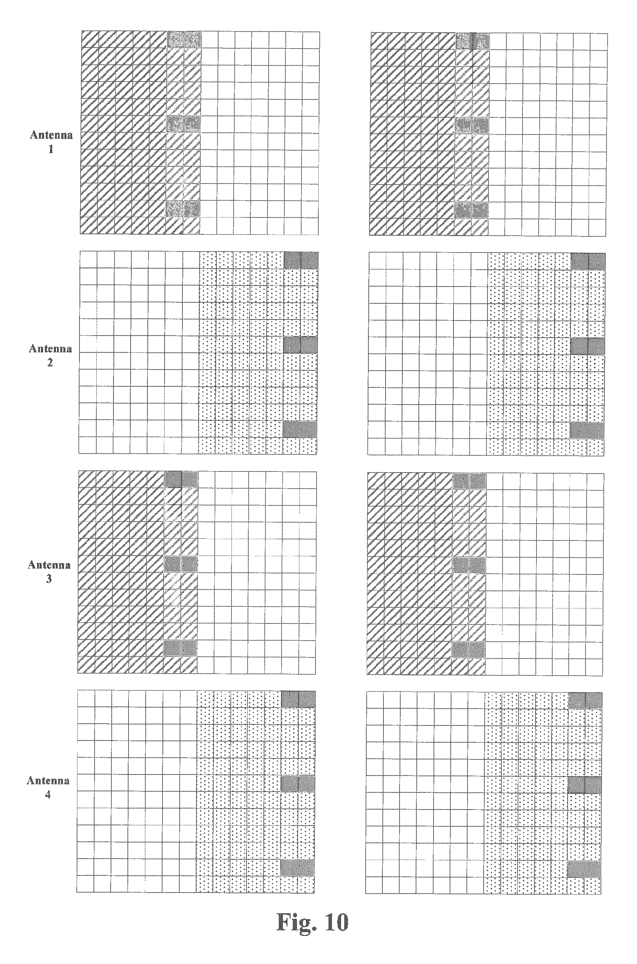

Fig. 10 is another schematic diagram of DM-RS configuration of ePHICH/ ePDCCH multiplexing SFBC transmission of an embodiment of the present application. As shown in Fig. 10, in the first PRB (⊘ region, the 1st slot), antennas 1 and 3 transmit data and DM-RS symbols simultaneously (the DM-RS symbols ▨ occupy 6 REs), the data symbols forming SFBC transmission, and the DM-RS symbols being used for channel estimation, while the first slots of antennas 2 and 4 are in vacancy. In the range of the second PRB (⊘ region), the data symbols of antennas 2 and 4 form SFBC transmission, and the DM-RS symbols occupying 6 REs are used for channel estimation in the range of the second PRB, while the second slots of antennas 1 and 3 are in vacancy. And the configuration schemes of the subsequent PRB pairs may be deduced by analogy.

In this way, based on the idea of antenna cycling, Fig. 10 gives a variant of the scheme shown in Fig. 9, with an object being to enable more SFBC transmission to be selected and cycled between different antennas. In Fig. 10, 2 DM-RS ports are still used, and antenna cycle may be performed twice in a PRB pair, thereby further exploiting performance gains possibly brought by antenna selection.

In this mode of implementation, in Fig. 10, it corresponds to dividing transmission configured with a DM-RS in a TDM manner in a time domain, that is, the transmission resource is obtained by dividing resource blocks in a time-division multiplexing manner in the time domain.

In another mode of implementation, the transmission resource is obtained by dividing resource blocks in a frequency-division multiplexing manner in a frequency domain.

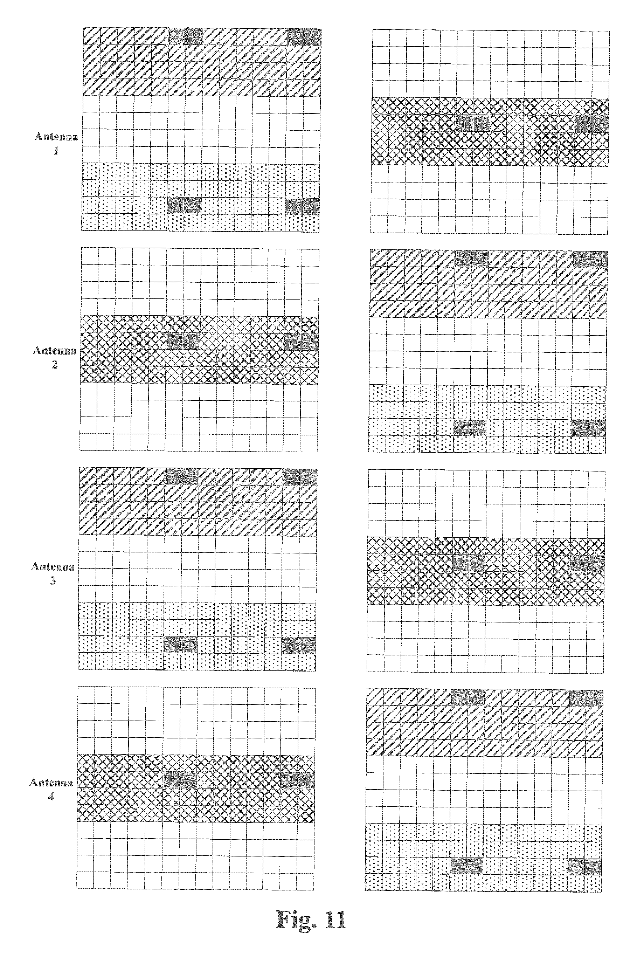

Fig. 11 is still another schematic diagram of DM-RS configuration of ePHICH/ePDCCH multiplexing SFBC transmission of an embodiment of the present application. Furthermore, a DM-RS may be divided and used in other manners in the frequency domain, which is not limited to the manner shown in Fig. 11.

As shown in Fig. 11, in the first PRB pair, the data mapped into a region of unit 1 (⊘ region) of antennas 1 and 3 form SFBC transmission, and DM-RS symbols (occupying 4 REs) in a corresponding region are transmitted. As for a region of unit 3 (▦ region), the data in antennas 1 and 3 mapped into the region form SFBC transmission, and DM-RS symbols in this region are transmitted. And as for a region of unit 2 (▨ region), the data in antennas 2 and 4 mapped into the region form SFBC transmission, and corresponding DM-RS symbols are transmitted. The blank region in Fig. 11 denotes that no data or DM-RS symbol is transmitted. In the next PRB pair, mapping manners of antenna data and the DM-RS are interchanged as shown in the right half of Fig. 11. Antenna cycle is performed twice in a PRB pair by using the scheme shown in Fig. 11.

It should be noted that the above illustrative description is given to how to divide transmission resource units.

However, it is not limited thereto, and a particular mode of implementation may be determined according to an actual situation only if a granularity of a transmission resource is greater than an RE and the transmission resource contains a resource element transmitting a reference signal.

In this embodiment, the number of DM-RS ports may be reduced (only two DM-RS ports are used in Figs. 9-11), the overhead of a reference signal is lowered, and antenna selection diversity is used to a maximum extent. This scheme has the same SFBC transmission scheme for both an ePHICH and an ePDCCH, hence, it is applicable to multiplexing transmission of an ePHICH and an ePDCCH, and at the same time, it may naturally be taken as an SFBC transmission scheme of the ePHICH and the ePDCCH, respectively.

In this embodiment, the overhead of DM-RS may be saved, and for a case of more than two transmission antennas, 2 DM-RS ports may be configured and used all along, and an object of using antenna selection gain is achieved in different mapping manners of data symbol and DM-RS.

This embodiment is described taking 4 antennas as an example, and actually, it is applicable to cases of more antennas. For example, in case of 8 antennas, for the cases shown in Figs. 9 and 10, these antennas may be mapped into 4 virtual antennas in a manner of virtual antenna mapping, with the manner of virtual antenna mapping being varied between a PRB pair/a PRB.

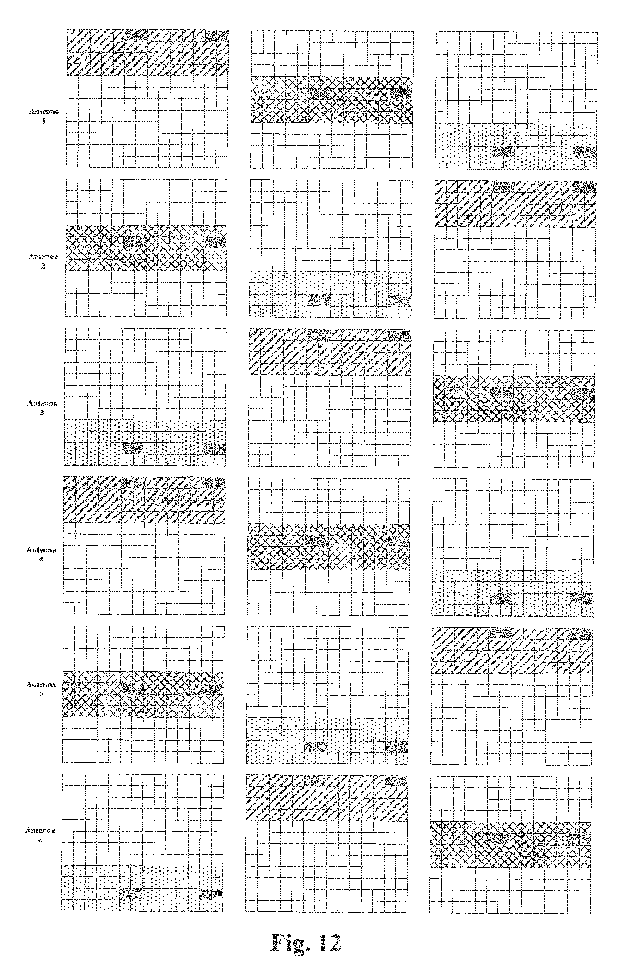

For the case shown in Fig. 11, the 8 antennas may be mapped into 6 virtual antennas. Fig. 12 is further still another schematic diagram of DM-RS configuration of ePHICH/ePDCCH multiplexing SFBC transmission of an embodiment of the present application. Fig. 12 shows SFBC transmission of 6 antennas of DM-RSs in an FDM manner. Transmission may be performed in the 6 antenna SFBC manner shown in Fig. 12, and the manner of virtual antenna mapping may be varied between a PRB pair/a PRB.

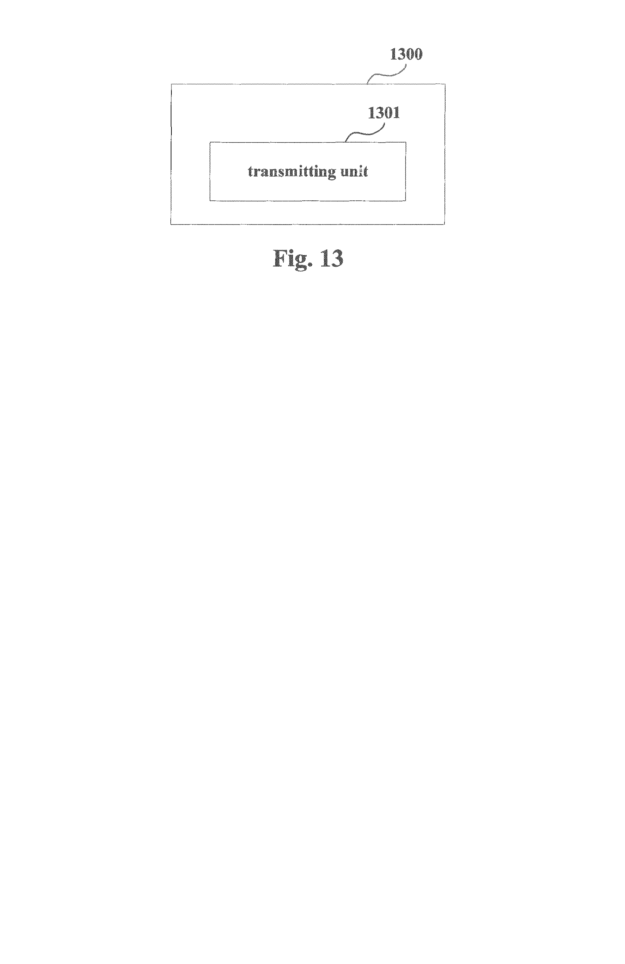

An embodiment of the present application further provides an eNB. Fig. 13 is a schematic diagram of the structure of the eNB of the embodiment of the present application. As shown in Fig. 13, the eNB 1300 includes: a transmitting unit 1301. The relevant art may be referred to for other components of the eNB, which are not shown in the figure.

Where, the transmitting unit 1301 transmits a control channel at a transmission resource granularity greater than a resource element, by using part of antennas; wherein the transmission resource contains a resource element for transmitting a reference signal.

In a mode of implementation, the transmission resource is in a PRB pair, or the transmission resource is in a PRB.

In another mode of implementation, the transmission resource is obtained by dividing resource blocks in a time-division multiplexing manner in a time domain, or is obtained by dividing resource blocks in a frequency-division multiplexing manner in a frequency domain.

In particular implementation, the control channel may be a physical downlink control channel and a physical hybrid automatic repeat request indicator channel, or the control channel is an enhanced physical downlink control channel and an enhanced physical hybrid automatic repeat request indicator channel. And the transmitting unit may be based on a DM-RS, or may be based on a common reference signal.

It can be seen from the above embodiment that the transmission of a control channel at a transmission resource granularity greater than a resource element by using some antennas may lower overhead of a reference signal, and perform transmission of the control channel by using antenna selection diversity to a maximum extent.

An embodiment of the present application further provides a computer-readable program, wherein when the program is executed in UE, the program enables a computer to carry out the method for linkage resource assignment as described in Embodiment 1 in the UE.

An embodiment of the present application further provides a storage medium in which a computer-readable program is stored, wherein the computer-readable program enables a computer to carry out the method for linkage resource assignment as described in Embodiment 1 in UE.

An embodiment of the present application further provides a computer-readable program, wherein when the program is executed in an eNB, the program enables a computer to carry out the method for multiplexing transmission as described in Embodiment 2 in the eNB.

An embodiment of the present application further provides a storage medium in which a computer-readable program is stored, wherein the computer-readable program enables a computer to carry out the method for multiplexing transmission as described in Embodiment 2 in an eNB.

The above apparatuses and methods of the present application may be implemented by hardware, or by hardware in combination with software. The present application relates to such a computer-readable program that when the program is executed by a logic device, the logic device is enabled to carry out the apparatus or components as described above, or to carry out the methods or steps as described above. The present application also relates to a storage medium for storing the above program, such as a hard disk, a floppy disk, a CD, a DVD, and a flash memory, etc.

One or more functional blocks and/or one or more combinations of the functional blocks in the accompanying drawings may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof. And they may also be realized as a combination of computing equipment, such as a combination of a DSP and a microprocessor, multiple processors, one or more microprocessors in communication combination with a DSP, or any other such configuration.

The present application is described above with reference to particular embodiments. However, it should be understood by those skilled in the art that such a description is illustrative only, and not intended to limit the protection scope of the present application. Various variants and modifications may be made by those skilled in the art according to the spirits and principle of the present application, and such variants and modifications fall within the scope of the present application.

**Claims**

1. A method for linkage resource assignment, comprising:

   acquiring, by UE, a lowest physical resource block index assigned to a physical uplink shared channel, cyclic shift information of an uplink demodulation reference signal, and an initial position of a physical resource occupied by uplink grant signaling; and
   calculating group identification and sequence identification of a physical hybrid automatic repeat request indicator channel (PHICH) or an enhanced physical hybrid automatic repeat request indicator channel (ePHICH), according to the lowest physical resource block index of the physical uplink shared channel, the cyclic shift information of the uplink demodulation reference signal, and the initial position of physical resource occupied by uplink grant signaling, so as to determine whether the PHICH or the ePHICH is assigned to the UE.

2. The method for linkage resource assignment according to claim 1, wherein the method for linkage resource assignment further comprises:

   acquiring, by the UE, configuration information for identifying different demodulation reference signal ports of physical downlink transmission; and
   calculating, by the UE, the group identification and the sequence identification of the PHICH or the ePHICH, according to the lowest physical resource block index of the physical uplink shared channel, the cyclic shift information of the uplink demodulation reference signal, the initial position of physical resource occupied by the uplink grant signaling, and the configuration information for identifying different demodulation reference signal ports of physical downlink transmission, so as to determine whether the PHICH or the ePHICH is assigned to the UE.

3. The method for linkage resource assignment according to claim 2, wherein the calculating the group identification and the sequence identification of the PHICH or the ePHICH comprises:

$$n_{PHICH}^{group} = (I_{PRB\_RA} + n_{DMRS} + I_{UL\_grant} + n_{DL\_DMRS}) \bmod N_{PHICH}^{group} + I_{PHICH} N_{PHICH}^{group}$$

$$n_{PHICH}^{seq} = (\left\lfloor (I_{PRB\_RA} + I_{UL\_grant}) / N_{PHICH}^{group} \right\rfloor + n_{DMRS} + n_{DL\_DMRS}) \bmod 2 N_{SF}^{PHICH}$$

where, $n_{\mathrm{PHICH}}^{\mathrm{group}}$ denotes the group identification of the PHICH or the ePHICH, $n_{\mathrm{PHICH}}^{\mathrm{seq}}$ denotes the sequence identification of the PHICH or the ePHICH, $N_{\mathrm{PHICH}}^{\mathrm{group}}$ denotes the number of the groups of the PHICH or the ePHICH, $N_{\mathrm{SF}}^{\mathrm{PHICH}}$ denotes the length of an orthogonal sequence, $I_{PRB\_RA}$ denotes the lowest physical resource block index of the physical uplink shared channel, $n_{DMRS}$ denotes the cyclic shift information of the uplink demodulation reference signal, $I_{UL\_grant}$ denotes the initial position of physical resource occupied by the uplink grant signaling, and $n_{DL\_DMRS}$ denotes the configuration information for identifying different demodulation reference signal ports of physical downlink transmission.

4. The method for linkage resource assignment according to claim 1 or 2, wherein the initial position of the physical resource occupied by the uplink grant signaling is in resource element, or in a minimum assignment granularity of an enhanced physical downlink control channel (ePDCCH).

5. The method for linkage resource assignment according to claim 2, wherein the configuration information for identifying different demodulation reference signal ports of physical downlink transmission is determined by a demodulation reference signal port and scrambling identification.

6. UE, comprising:

an information acquiring unit, configured to acquiring a lowest physical resource block index assigned to a physical uplink shared channel, cyclic shift information of an uplink demodulation reference signal, and an initial position of a physical resource occupied by uplink grant signaling; and
a resource determining unit, configured to calculate group identification and sequence identification of a physical hybrid automatic repeat request indicator channel (PHICH) or an enhanced physical hybrid automatic repeat request indicator channel (ePHICH), according to the lowest physical resource block index of the physical uplink shared channel, the cyclic shift information of the uplink demodulation reference signal, and the initial position of the physical resource occupied by uplink grant signaling, so as to determine whether the PHICH or the ePHICH is assigned to the UE.

7. The UE according to claim 6, wherein the information acquiring unit is further configured to acquire configuration information for identifying different demodulation reference signal ports of physical downlink transmission;
and the resource determining unit is further configured to calculate the group identification and the sequence identification of the PHICH or the ePHICH, according to the lowest physical resource block index of the physical uplink shared channel, the cyclic shift information of the uplink demodulation reference signal, the initial position of the physical resource occupied by the uplink grant signaling, and the configuration information for identifying different demodulation reference signal ports of physical downlink transmission, so as to determine whether the PHICH or the ePHICH is assigned to the UE.

8. The UE according to claim 7, wherein the resource determining unit uses the following expressions in calculation:

$$n_{PHICH}^{group} = (I_{PRB\_RA} + n_{DMRS} + I_{UL\_grant} + n_{DL\_DMRS}) \bmod N_{PHICH}^{group} + I_{PHICH} N_{PHICH}^{group}$$

$$n_{PHICH}^{seq} = (\lfloor (I_{PRB\_RA} + I_{UL\_grant}) / N_{PHICH}^{group} \rfloor + n_{DMRS} + n_{DL\_DMRS}) \bmod 2 N_{SF}^{PHICH}$$

where, $n_{\text{PHICH}}^{\text{group}}$ denotes the group identification of the PHICH or the ePHICH, $n_{\text{PHICH}}^{\text{seq}}$ denotes the sequence identification of the PHICH or the ePHICH, $N_{\text{PHICH}}^{\text{group}}$ denotes the number of the groups of the PHICH or the ePHICH, $N_{\text{SF}}^{\text{PHICH}}$ denotes the length of an orthogonal sequence, $I_{PRB\_RA}$ denotes the lowest physical resource block index of the physical uplink shared channel, $n_{DMRS}$ denotes the cyclic shift information of the uplink demodulation reference signal, $I_{UL\_grant}$ denotes the initial position of physical resource occupied by the uplink grant signaling, and $n_{DL\_DMRS}$ denotes the configuration information for identifying different demodulation reference signal ports of physical downlink transmission.

9. The UE according to claim 6 or 7, wherein the initial position of the physical resource occupied by the uplink grant signaling is in resource element, or in minimum assignment granularity of an enhanced physical downlink control channel (ePDCCH).

10. The UE according to claim 7, wherein the configuration information for identifying different demodulation reference signal ports of physical downlink transmission is determined by a demodulation reference signal port and scrambling identification.

11. A method for multiplexing transmission, comprising:

transmitting, by an eNB, a control channel at a transmission resource granularity greater than a resource element

by using part of antennas; wherein a transmission resource contains a resource element for transmitting a reference signal.

12. The method for multiplexing transmission according to claim 11, wherein the transmission resource is in a physical resource block pair, or the transmission resource is in a physical resource block.

13. The method for multiplexing transmission according to claim 11, wherein the transmission resource is obtained by dividing resource blocks in a time-division multiplexing manner in a time domain, or is obtained by dividing resource blocks in a frequency-division multiplexing manner in a frequency domain.

14. The method for multiplexing transmission according to claim 11, wherein the control channel is a physical downlink control channel (PDCCH) and a physical hybrid automatic repeat request indicator channel (PHICH),
or the control channel is an enhanced physical downlink control channel (ePDCCH) and an enhanced physical hybrid automatic repeat request indicator channel (ePHICH).

15. The method for multiplexing transmission according to claim 11, wherein the method for multiplexing transmission is based on a demodulation reference signal, or based on a common reference signal.

16. An eNB, comprising:

a transmitting unit, configured to transmit a control channel at a transmission resource granularity greater than a resource element by using part of antennas; wherein a transmission resource contains a resource element for transmitting a reference signal.

17. The eNB according to claim 16, wherein the transmission resource is in a physical resource block pair, or the transmission resource is in a physical resource block.

18. The eNB according to claim 16, wherein the transmission resource is obtained by dividing resource blocks in a time-division multiplexing manner in a time domain, or is obtained by dividing resource blocks in a frequency-division multiplexing manner in a frequency domain.

19. The eNB according to claim 16, wherein the control channel is a physical downlink control channel (PDCCH) and a physical hybrid automatic repeat request indicator channel (PHICH),
or the control channel is an enhanced physical downlink control channel (ePDCCH) and an enhanced physical hybrid automatic repeat request indicator channel (ePHICH).

20. The eNB according to claim 16, wherein the transmitting unit performs transmission based on a demodulation reference signal, or based on a common reference signal.

21. A computer-readable program, wherein when the program is executed in UE, the program enables a computer to carry out the method for linkage resource assignment as claimed in any one of claims 1-5 in the UE.

22. A storage medium in which a computer-readable program is stored, wherein the computer-readable program enables a computer to carry out the method for linkage resource assignment as claimed in any one of claims 1-5 in UE.

23. A computer-readable program, wherein when the program is executed in an eNB, the program enables a computer to carry out the method for multiplexing transmission as claimed in any one of claims 11-15 in the eNB.

24. A storage medium in which a computer-readable program is stored, wherein the computer-readable program enables a computer to carry out the method for multiplexing transmission as claimed in any one of claims 11-15 in an eNB.

**Fig.1**

201

acquiring, by UE, a lowest PRB index assigned to a PUSCH, cyclic shift information of an uplink DM-RS, and an initial position of a physical resource occupied by uplink grant signaling

202

calculating group identification and sequence identification of a PHICH or an ePHICH, according to the lowest PRB index of the PUSCH, the cyclic shift information of the uplink DM-RS, and the initial position of physical resource occupied by uplink grant signaling, so as to determine whether the PHICH or the ePHICH is assigned to the UE

**Fig. 2**

301

acquiring, by the UE, a lowest PRB index assigned to a PUSCH, cyclic shift information of an uplink DM-RS, an initial position of a physical resource occupied by uplink grant signaling, and configuration information for identifying different demodulation reference signal ports of physical downlink transmission

302

calculating, by the UE, the group identification and the sequence identification of the PHICH/ePHICH, according to the lowest PRB index of the PUSCH, the cyclic shift information of the uplink DM-RS, the initial position of physical resource occupied by the uplink grant signaling, and the configuration information for identifying different DM-RS ports of physical downlink transmission, so as to determine whether the PHICH/ePHICH is assigned to the UE

Fig. 3

400

401

information acquiring unit

402

resource determining unit

Fig. 4

ePDCCH
DM-RS port=4

RE →

Antenna ↓

PRB pair 1

| $S_0$ | $S_1$ | ⊠ | ⊠ | $S_4$ | $S_5$ | ⊠ | ⊠ | ... |
| ⊠ | ⊠ | $S_2$ | $S_3$ | ⊠ | ⊠ | $S_6$ | $S_7$ | ... |
| $-S_1^*$ | $S_0^*$ | ⊠ | ⊠ | $-S_5^*$ | $S_4^*$ | ⊠ | ⊠ | ... |
| ⊠ | ⊠ | $-S_3^*$ | $S_2^*$ | ⊠ | ⊠ | $-S_7^*$ | $S_6^*$ | ... |

PRB pair 2

| $S_8$ | $S_9$ | ⊠ | ⊠ | $S_{12}$ | $S_{13}$ | ⊠ | ⊠ | ... |
| ⊠ | ⊠ | $S_{10}$ | $S_{11}$ | ⊠ | ⊠ | $S_{14}$ | $S_{15}$ | ... |
| $-S_9^*$ | $S_8^*$ | ⊠ | ⊠ | $-S_{13}^*$ | $S_{12}^*$ | ⊠ | ⊠ | ... |
| ⊠ | ⊠ | $-S_{11}^*$ | $S_{10}^*$ | ⊠ | ⊠ | $-S_{15}^*$ | $S_{14}^*$ | ... |

...

**Fig. 5**

ePHICH
DM-RS port=4

RE →

Antenna ↓

| PRB pair 1 | | | | | | | | |
|---|---|---|---|---|---|---|---|---|
| $S_0$ | $S_1$ | $S_2$ | $S_3$ | | | | | ... |
| | | | | $S_4$ | $S_5$ | $S_6$ | $S_7$ | ... |
| $-S_1^*$ | $S_0^*$ | $-S_3^*$ | $S_2^*$ | | | | | ... |
| | | | | $-S_5^*$ | $S_4^*$ | $-S_7^*$ | $S_6^*$ | ... |

| PRB pair 2 | | | | | | | | |
|---|---|---|---|---|---|---|---|---|
| $S_8$ | $S_9$ | $S_{10}$ | $S_{11}$ | | | | | ... |
| | | | | $S_{12}$ | $S_{13}$ | $S_{14}$ | $S_{15}$ | ... |
| $-S_9^*$ | $S_8^*$ | $-S_{11}^*$ | $S_{10}^*$ | | | | | ... |
| | | | | $-S_{13}^*$ | $S_{12}^*$ | $-S_{15}^*$ | $S_{14}^*$ | ... |

...

# Fig. 6

701

transmitting, by an eNB, a control channel at a
transmission resource granularity greater than a
resource element by using part of antennas; wherein
the transmission resource contains a resource element
for transmitting a reference signal

Fig. 7

ePHICH,ePDCCH Multiplexing
DM-RS port=2

RE →

Antenna ↓

| PRB pair 1 | | | | | | | | |
|---|---|---|---|---|---|---|---|---|
| $s_0$ | $s_1$ | $s_2$ | $s_3$ | $s_4$ | $s_5$ | $s_6$ | $s_7$ | ... |
| | | | | | | | | ... |
| $-s_1^*$ | $s_0^*$ | $-s_3^*$ | $s_2^*$ | $-s_5^*$ | $s_4^*$ | $-s_7^*$ | $s_6^*$ | ... |
| | | | | | | | | ... |

| PRB pair 2 | | | | | | | | |
|---|---|---|---|---|---|---|---|---|
| | | | | | | | | ... |
| $s_8$ | $s_9$ | $s_{10}$ | $s_{11}$ | $s_{12}$ | $s_{13}$ | $s_{14}$ | $s_{15}$ | ... |
| | | | | | | | | ... |
| $-s_9^*$ | $s_8^*$ | $-s_{11}^*$ | $s_{10}^*$ | $-s_{13}^*$ | $s_{12}^*$ | $-s_{15}^*$ | $s_{14}^*$ | ... |

...

# Fig. 8

Fig. 9

Antenna 1

Antenna 2

Antenna 3

Antenna 4

Fig. 10

Antenna 1

Antenna 2

Antenna 3

Antenna 4

Fig. 11

Fig. 12

1300

1301

transmitting unit

Fig. 13

<table>
<tr><td colspan="2"><b>INTERNATIONAL SEARCH REPORT</b></td><td>International application No.<br><br>**PCT/CN2012/070054**</td></tr>
</table>

**A. CLASSIFICATION OF SUBJECT MATTER**

**H04W 72/04 (2009.01) i**

According to International Patent Classification (IPC) or to both national classification and IPC

**B. FIELDS SEARCHED**

Minimum documentation searched (classification system followed by classification symbols)

**IPC: H04Q; H04B; H04M; H04L; H04W**

Documentation searched other than minimum documentation to the extent that such documents are included in the fields searched

Electronic data base consulted during the international search (name of data base and, where practicable, search terms used)

DWPI, EPODOC, CPRSABS, CNKI: physical hybrid ARQ indicator channel, physical uplink shared channel, physical downlink shared channel, identifier, multi, lte, material resource, resource element, pairing, link, PDCCH, HARQ, PHICH, PUSCH, prb, block, resources, map+, antenna

**C. DOCUMENTS CONSIDERED TO BE RELEVANT**

| Category* | Citation of document, with indication, where appropriate, of the relevant passages | Relevant to claim No. |
|---|---|---|
| A | CN 102076094 A (BEIJING SAMSUNG COMMUNICATION TECHNOLOGY RESEARCH INSTITUTE), 25 May 2011 (25.05.2011), abstract | 1-24 |
| X | CN 102237951 A (CHINA MOBILE COMMUNICATIONS CORP.), 09 November 2011 (09.11.2011), description, paragraphs [0002]-[0014] and [0088]-[0100] | 11-20, 23-24 |
| A | | 1-10, 21-22 |
| A | CN 101854662 A (SAMSUNG ELECTRONICS CO., LTD.), 06 October 2010 (06.10.2010), the whole document | 1-24 |

☐ Further documents are listed in the continuation of Box C.      ☒ See patent family annex.

| | |
|---|---|
| * Special categories of cited documents:<br><br>"A" document defining the general state of the art which is not considered to be of particular relevance<br><br>"E" earlier application or patent but published on or after the international filing date<br><br>"L" document which may throw doubts on priority claim(s) or which is cited to establish the publication date of another citation or other special reason (as specified)<br><br>"O" document referring to an oral disclosure, use, exhibition or other means<br><br>"P" document published prior to the international filing date but later than the priority date claimed | "T" later document published after the international filing date or priority date and not in conflict with the application but cited to understand the principle or theory underlying the invention<br><br>"X" document of particular relevance; the claimed invention cannot be considered novel or cannot be considered to involve an inventive step when the document is taken alone<br><br>"Y" document of particular relevance; the claimed invention cannot be considered to involve an inventive step when the document is combined with one or more other such documents, such combination being obvious to a person skilled in the art<br><br>"&" document member of the same patent family |
| Date of the actual completion of the international search<br><br>20 September 2012 (20.09.2012) | Date of mailing of the international search report<br><br>**25 October 2012 (25.10.2012)** |
| Name and mailing address of the ISA/CN:<br>State Intellectual Property Office of the P. R. China<br>No. 6, Xitucheng Road, Jimenqiao<br>Haidian District, Beijing 100088, China<br>Facsimile No.: (86-10) 62019451 | Authorized officer<br><br>**WANG, Ju**<br><br>Telephone No.: (86-10) **62411392** |

Form PCT/ISA/210 (second sheet) (July 2009)

## INTERNATIONAL SEARCH REPORT
Information on patent family members

| International application No. |
| --- |
| **PCT/CN2012/070054** |

| Patent Documents referred in the Report | Publication Date | Patent Family | Publication Date |
| --- | --- | --- | --- |
| CN 102076094 A | 25.05.2011 | None | |
| CN 102237951 A | 09.11.2011 | None | |
| CN 101854662 A | 06.10.2010 | None | |

Form PCT/ISA/210 (patent family annex) (July 2009)